# DEMANDE DE BREVET EUROPEEN

(11) **EP 3 536 201 A1**
(43) Date de publication de la demande: **11.09.2019**
(21) Numéro de dépôt: 18161092.4
(22) Date de dépôt: 09.03.2018
(51) Int. Cl.: A47J 31/44

(54) **DISPOSITIF DE PRODUCTION DE VAPEUR ET D'AIR SOUS PRESSION ET PROCÉDÉ DE COMMANDE D'UN TEL DISPOSITIF**

(71) Demandeur: Reneka International, 67560 Rosheim (FR)
(72) Inventeur: RUHL, Christian, 67203 OBERSCHAEFFOLSHEIM (FR)
(74) Mandataire: Merckling, Norbert

(57) **Abrégé**

L'invention concerne un procédé de commande d'une machine ou dispositif pour produire et délivrer de la vapeur et/ou d'air sous pression pour chauffer et/ou émulsifié un produit alimentaire, consistant à injecter de la vapeur et/ou de l'air dans le produit, caractérisé en ce qu'il comprend les étapes :
a) délivrer la vapeur à débit constant selon une durée prédéfinie en fonction de la température finale souhaitée pour le produit ; ou
b) délivrer la vapeur à débit constant selon une durée prédéfinie en fonction de la température finale souhaitée pour le produit et délivrer simultanément une quantité d'air donnée en sélectionnant le débit d'air de manière à donner au dit produit une consistance désirée.

## Description

### Domaine technique

L'invention se rapporte au domaine technique général des dispositifs, systèmes ou machines permettant de chauffer une boisson et pour générer de la mousse à partir d'un produit par exemple le lait. On connaît des machines de préparation de boissons chaudes par exemple des machines à café cappuccinos, chocolats chaud ou autres comportant un tel dispositif. Ce dernier est communément appelé mousseur de lait.

### Etat de la technique

On connaît les machines comportant un dispositif pour chauffer les boissons ou pour produire de la mousse. Ces machines présentent de plus en plus souvent une automatisation dans leur fonctionnement.

De telles machines présentent cependant un certain nombre d'inconvénients. En effet, lors de leur utilisation lors des périodes de pointe pendant lesquelles il faut servir un grand nombre de clients, ces machines sont utilisées par de multiples opérateurs dont chacun a une manière plus ou moins personnelle pour préparer les boissons chaudes. En outre, les produits utilisés par exemple le lait, ne sont pas toujours rigoureusement identiques, soit dans leur consistance, soit dans leur température de départ. Il est donc souvent difficile de garantir une constance dans la qualité du produit ou de la boisson chaude obtenue.

On connaît également des dispositifs ou machines permettant de produire de la mousse dans lesquels il convient de remplacer une buse pour modifier la quantité d'air fourni lors de la production de mousse. Le remplacement d'une buse pour s'adapter à la préparation d'une boisson bien particulière n'est donc pas aisé et difficilement envisageable lorsque la machine ou le dispositif est en service. Il en résulte donc, que le risque de fournir aux clients un produit ou une boisson chaude de qualité relativement inégale.

### Exposé de l'invention

L'objet de la présente invention vise par conséquent à pallier les inconvénients de l'art antérieur et de proposer un nouveau procédé de commande pour piloter un dispositif de production de vapeur et d'air sous pression, dont la mise en oeuvre est particulièrement simple et efficace.

Un autre objet de la présente invention vise à proposer un dispositif de production de vapeur d'eau et d'air sous pression, dont la construction est simple, fiable et ergonomique.

Un autre objet de la présente invention vise à proposer un nouveau procédé de production de vapeur d'eau et d'air sous pression, susceptible d'être mis en oeuvre pour la préparation d'un très grand nombre de produits ou de boissons chaudes sans avoir à intervenir et à procéder à des modifications structurelles sur la machine dans laquelle est mise en oeuvre ledit procéder.

Un autre objet de la présente invention vise à fournir un programme d'ordinateur destiné à mettre en oeuvre le procédé de commande conforme à l'invention.

Les objets assignés à l'invention sont atteints à l'aide d'un procédé de commande d'une machine ou dispositif pour produire et délivrer de la vapeur et d'air sous pression pour chauffer et/ou émulsifié un produit alimentaire, consistant à injecter de la vapeur et/ou de l'air dans le produit, caractérisé en ce qu'il comprend les étapes :
a) délivrer la vapeur à débit constant selon une durée prédéfinie en fonction de la température finale souhaitée pour le produit ; ou
b) délivrer la vapeur à débit constant selon une durée prédéfinie en fonction de la température finale souhaitée pour le produit et délivrer simultanément une quantité d'air donnée en sélectionnant le débit d'air de manière à donner au dit produit une consistance désirée.

Selon un exemple de mise en oeuvre, le procédé de commande consiste à sélectionner la durée de délivrance de vapeur d'eau et le débit d'air sous forme de couple de valeurs de consigne, parmi un ensemble prédéterminé de couples de valeurs prédéterminées.

Selon un exemple de mise en oeuvre conforme à l'invention, le procédé consiste à utiliser une unité de commande comportant un microprocesseur et une unité de mémoire pour stocker les valeurs prédéterminées.

Selon un exemple de mise en oeuvre conforme à l'invention, le procédé consiste à utiliser une unité de commande comprenant une carte électronique comportant une micro-mémoire dans laquelle sont enregistrées les valeurs prédéterminées.

Selon un exemple de mise en oeuvre conforme à l'invention, le procédé consiste à sélectionner des fonctionnalités se rapportant à un mode de production dans lequel on produit de la vapeur et de l'air sous pression ou se rapportant à un mode de maintenance dans lequel le dispositif est nettoyé.

Selon un exemple de mise en oeuvre conforme à l'invention, le procédé consiste à utiliser un microprocesseur et une unité de mémoire pour piloter les fonctionnalités de la machine ou dispositif.

Les objets assignés à l'invention sont également atteints à l'aide d'un produit programme d'ordinateur comprenant des instructions de code de programme enregistrées sur un support lisible par ordinateur pour mettre en oeuvre les étapes du procédé tel que présenté ci-dessus, lorsque le programme fonctionne sur un ordinateur.

Les objets assignés à l'invention sont également atteints à l'aide d'un dispositif pour mettre en oeuvre le procédé de commande tel que présenté ci-dessus, caractérisé en ce qu'il comprend :
- une chaudière à vapeur pour produire de la vapeur sous pression, alimentant un mélangeur via une vanne magnétique trois voies,
- une pompe à air alimentant le mélangeur avec de l'air sous pression,
- un mousseur à lait pourvu d'un capteur de température et alimenté par le mélangeur en vapeur et/ou en air sous pression,
- une unité de commande pilotant le fonctionnement de la chaudière à vapeur, de la pompe, de la vanne électromagnétique trois voies et recevant des informations issues des capteurs de température et de pression, et
- des organes d'actionnement reliés à l'unité de commande pour sélectionner les fonctionnalités désirées.

Selon un exemple de réalisation conforme à l'invention, le dispositif comprend un clapet anti-retour disposé dans la conduite de refoulement de manière à éviter la remontée de vapeur sous pression vers la pompe à air.

Selon un exemple de réalisation du dispositif conforme à l'invention, l'unité de commande est reliée à une carte électronique générale pour piloter les paramètres physiques nécessaires à définir les différentes fonctionnalités dudit dispositif.

Selon un exemple de réalisation du dispositif conforme à l'invention, l'unité de commande comprend une carte électronique comportant une micro-mémoire dans laquelle sont stockées les valeurs des paramètres physiques.

Les objets assignés à l'invention sont également atteints à l'aide d'une machine pour la préparation de cafés ou de boissons chaudes intégrant un dispositif tel que présenté ci-dessus.

### Brève description des figures

D'autres caractéristiques et avantages de l'invention apparaîtront plus clairement à la lecture de la description détaillée qui va suivre, faite en référence aux dessins annexés, donnés à titre d'exemples non limitatifs, dans lesquels :
- la figure 1, est une représentation schématique fonctionnelle d'un exemple de réalisation d'un dispositif de production de mélanges air-vapeur conforme à l'invention, et
- la figure 2, illustre un détail agrandi de la figure 1.

### Mode(s) de réalisation de l'invention

Les éléments structurellement et fonctionnellement identiques et présents sur plusieurs figures distinctes, sont affectés d'une même référence numérique ou alphanumérique.

Le dispositif comprend une chaudière à vapeur 1 pour générer de la vapeur d'eau sous pression. La chaudière à vapeur 1 comprend une cuve 2 contenant de l'eau 3. Cette eau 3 est en partie transformée en vapeur d'eau 4 par l'intermédiaire d'une résistance électrique 5 immergée. La chaudière à vapeur 1 comporte également des capteurs de niveau 6 et 7 et un capteur de température 8.

Le dispositif conforme à l'invention comporte également des organes de commande, par exemple une première touche d'actionnement 9 et une seconde touche d'actionnement 10, pour la mise en oeuvre des différentes fonctionnalités. Les touches d'actionnement 9 et 10, par exemple des boutons poussoirs ou tactiles, sont reliées par exemple par l'intermédiaire d'une liaison électrique 11 à une unité de commande 12 du dispositif conforme à l'invention.

C'est cette unité de commande 12 qui permet de piloter l'activation et la désactivation des différentes fonctionnalités du dispositif conforme à l'invention en fonction de consignes. L'unité de commande 12 est constituée par exemple d'une carte électronique comportant une micro-mémoire.

L'unité de commande 12 est par exemple reliée par l'intermédiaire d'une liaison électrique 11 à une carte électronique générale 13, utilisée pour piloter le fonctionnement d'une machine intégrant le dispositif conforme à l'invention.

Les paramètres de fonctionnement du dispositif conforme à l'invention sont des paramètres physiques comprenant avantageusement le débit d'air, de sorte que la quantité d'air dans le mélange vapeur - air soit maximale, lorsque la vitesse de rotation d'une pompe à air 14 est maximale. Ainsi, à titre d'exemple, avec une vitesse de rotation de la pompe à air 14 de 6000 tours/mn, on obtient un débit d'air d'environ 2,5 l/mn.

Les paramètres de fonctionnement du dispositif conforme à l'invention comprennent également la température finale d'un produit 22 liquide, laquelle est comprise entre 10°C et 100°C. Cette température finale est représentative de la durée d'injection de vapeur d'eau dans le produit 22 et ce à débit constant, par l'intermédiaire d'un mousseur 21.

Ainsi, selon un exemple de mise en oeuvre, lorsque la chaudière à vapeur 1 est à une température de 120°C, avec une pression interne de 1 bar et avec un débit d'air maximal, la durée d'injection de vapeur est de 24 s pour porter du lait à 60°C en partant de 10°C.

L'unité de commande 12 pilote également par l'intermédiaire d'une liaison électrique 11, le fonctionnement de la pompe à air 14, par exemple une pompe péristaltique. Cette dernière permet de produire de l'air sous pression lequel est nécessaire pour faire mousser le produit 22. Le débit d'air est déterminé par la vitesse de rotation de la pompe à air 14. Différentes valeurs de débit d'air peuvent ainsi être enregistrées et commandées par l'intermédiaire d'un actionnement simple ou multiple du ou des touches de commande 9 et 10.

Le dispositif conforme à l'invention comporte également une buse d'admission d'air 15 permettant de limiter le débit d'air, notamment lorsque ladite pompe à air 14 fonctionne avec une vitesse de rotation maximale. L'air sous pression est ensuite amené par l'intermédiaire d'une conduite de refoulement 16 vers un mélangeur 17. Ce dernier est constitué avantageusement une portion de conduite en T.

Un clapet anti-retour 18 est avantageusement disposé dans la conduite de refoulement 16 de manière à éviter la remontée de vapeur sous pression vers la pompe à air 14 lorsque le fonctionnement de cette dernière est interrompu. Lorsque la pompe à air 14 fournit de l'air sous pression, la vapeur se dirige vers le mousseur 21, dans la mesure où la pression dans le produit 22, en l'occurrence un liquide, est toujours inférieure à la pression régnant dans la conduite de refoulement 16.

Selon un exemple de réalisation, le dispositif comporte également une vanne électromagnétique trois voies 19 disposée dans un conduit d'alimentation en vapeur la reliant la cuve 2 au mélangeur 17. Cette vanne électromagnétique trois voies 19 permet ainsi d'ouvrir ou de fermer le passage de la vapeur. La vanne électromagnétique trois voies 19 est avantageusement reliée par l'intermédiaire d'une liaison électrique 11 à l'unité de commande 12.

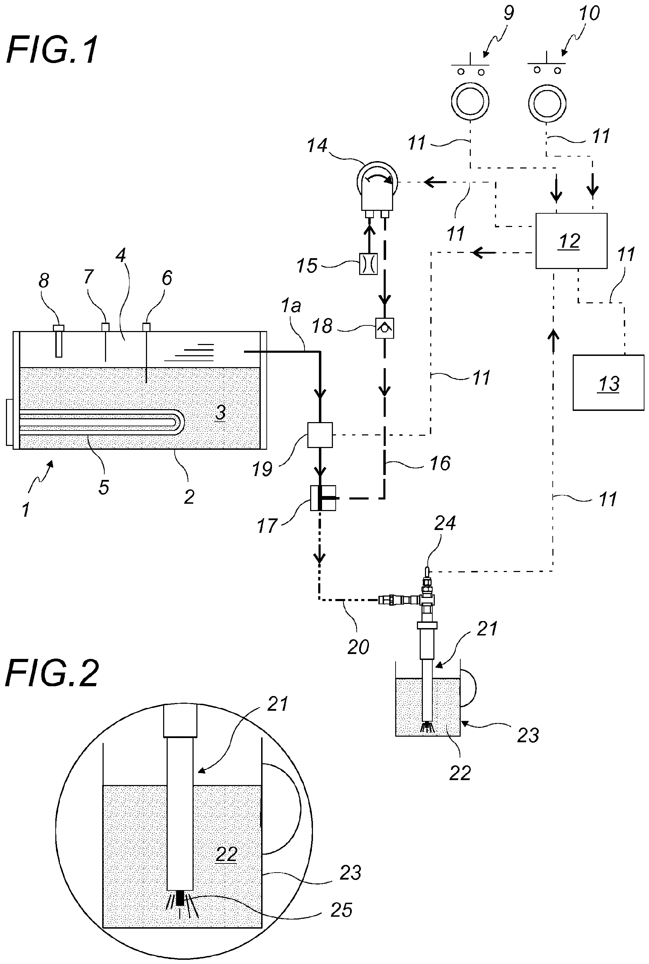

Le mélangeur 17 est relié par l'intermédiaire d'un conduit additionnel 20 à un mousseur 21. Ce dernier est par exemple plongé dans le produit 22, ou boisson contenu dans un récipient 23. À titre d'exemple, le conduit additionnel 20 achemine vers le mousseur 21, un mélange de vapeur et d'air sous pression. Cet acheminement est illustré à la figure 1 par l'intermédiaire de traits mixtes discontinus.

Selon un mode de réalisation, le dispositif comporte également un capteur de température additionnel 24 disposé par exemple sur le mousseur 21 et relié électriquement par l'intermédiaire d'une liaison électrique 11 à l'unité de commande 12. Ce capteur de température additionnel 24 permet de mesurer la température du produit 22 et de stopper via l'unité de commande 12, le cycle de production vapeur et/ou d'air sous pression lorsque la température souhaitée pour ledit produit est atteinte.

Le mousseur 21 comporte avantageusement à son extrémité libre une buse d'expulsion 25 de l'air sous pression ou d'un mélange vapeur d'eau - air sous pression. Les dimensions et les formes de cette buse d'expulsion 25 sont adaptées à la production de mousse et sont connues. Elles ne sont donc pas décrites davantage.

Selon un exemple de fonctionnement du dispositif conforme à l'invention, l'utilisateur actionne la première touche de commande 9. La pompe à air 14 se met en marche avec une vitesse de rotation adaptée à la génération d'un débit d'air donné. Le fonctionnement de la pompe à air 14 est piloté par l'unité de commande 12. L'air aspiré à travers la buse d'admission d'air 15 est refoulé via le clapet anti-retour 18 vers le mélangeur 17.

Simultanément, avec un actionnement de la seconde touche de commande, l'unité de commande 12 pilote l'ouverture et la fermeture de la vanne électromagnétique trois voies 19. L'ouverture de la vanne électromagnétique permet d'acheminer de la vapeur sous pression vers le mélangeur 17. Ce dernier permet de mélanger la vapeur provenant de la chaudière 1 et l'air provenant de la pompe à air 14. Le mélange vapeur - air ainsi produit est ensuite acheminé vers le mousseur 21 partiellement immergé dans le produit 22, par exemple du lait.

Le capteur de température additionnel 24, relié à l'unité de commande 12, permet de renseigner cette dernière sur la température du produit 22. Lorsque la température prédéfinie et souhaitée du produit 22 est atteinte, la vanne électromagnétique trois voies 19 est actionnée et interrompt l'injection de vapeur seule ou du mélange air-vapeur.

A titre d'exemple, le fonctionnement de la pompe à air 14 est alors interrompu concomitamment à l'interruption de l'injection de vapeur et la production de mousse est terminée.

En outre, la troisième voie de la vanne électromagnétique trois voies 19 permet de mettre à l'air libre le conduit additionnel 20, lequel est en liaison fluidique avec le mousseur 21, pour éviter une aspiration du produit 22 dans ledit conduit additionnel 20. Une telle aspiration peut résulter d'une chute de pression ou vide provoquée par la condensation de vapeur d'eau dans le conduit additionnel 20.

L'invention concerne également un produit programme d'ordinateur pouvant être chargé dans une unité de mémoire associée à un microprocesseur d'une unité de commande, pour piloter la mise en oeuvre des étapes du procédé tel que présenté ci-dessus, lorsque les instructions dudit produit programme d'ordinateur sont exécutées sur ladite unité de commande.

A titre d'exemple, le produit programme d'ordinateur peut être chargé dans une unité de mémoire associée à un microprocesseur de unité de commande 12 ou de la carte électronique générale 13, pour piloter la mise en oeuvre des étapes du procédé tel que présenté ci-dessus, lorsque les instructions dudit produit programme d'ordinateur sont exécutées sur ladite unité de commande 12 ou sur ladite carte électronique générale 13.

Selon un exemple de mise en oeuvre conforme à l'invention, le procédé consiste également à sélectionner des fonctionnalités se rapportant à un mode de maintenance dans lequel on nettoie la machine ou le dispositif. Dans ce mode de maintenance, la vanne électromagnétique trois voies 19 est pilotée pour délivrer la vapeur d'eau sous forme d'impulsions successives. La vanne électromagnétique 19 est par exemple ouverte durant 2s, puis fermée durant 5s. Ce cycle est alors répété par exemple pendant 3mn. Certaines impulsions d'ouverture et de fermeture peuvent avantageusement présenter une durée plus longue, par exemple respectivement de 10s et de 30s, pour optimiser l'opération de nettoyage et/ou de débouchage.

Les différentes fonctionnalités en mode production du dispositif conforme à l'invention sont commandées par exemple par l'actionnement respectivement long et court de chacune des touches de commande 9 et 10. Il est alors possible de commander quatre fonctionnalités. Chaque fonctionnalité correspond à un couple débit d'air - température finale du produit 22.

A titre d'exemple, pour initier le mode maintenance, il convient de couper l'alimentation électrique de la machine intégrant le dispositif conforme à l'invention, puis de rétablir ladite alimentation électrique en appuyant simultanément sur les deux touches de commande 9 et 10 et ce pendant une durée prédéterminée, par exemple de 3s. Le mode maintenance démarre alors automatiquement. Lorsque le mode de maintenance est terminé, le mode production est à nouveau initié automatiquement et le dispositif conforme à l'invention est en attente d'actionnements des touches de commande 9 et 10.

Il est évident que la présente description ne se limite pas aux exemples explicitement décrits, mais comprend également d'autres modes de réalisation et/ou mise en oeuvre. Ainsi, une caractéristique technique décrite ou une étape de mise en oeuvre décrite, peut être remplacée respectivement par une caractéristique technique équivalente ou une étape équivalente, sans sortir du cadre et de la portée de l'invention.

## Revendications

1. Procédé de commande d'une machine ou dispositif pour produire et délivrer de la vapeur d'eau et d'air sous pression pour chauffer et/ou émulsifié un produit (22) alimentaire, consistant à injecter de la vapeur d'eau et/ou de l'air dans le produit (22), **caractérisé en ce qu'**il comprend les étapes :
a) délivrer la vapeur d'eau à débit constant selon une durée prédéfinie en fonction de la température finale souhaitée pour le produit (22) ; ou
b) délivrer la vapeur d'eau à débit constant selon une durée prédéfinie en fonction de la température finale souhaitée pour le produit (22) et délivrer simultanément une quantité d'air donnée en sélectionnant le débit d'air de manière à donner au dit produit (22) une consistance désirée.

2. Procédé de commande selon la revendication 1, **caractérisé en ce qu'**il consiste à sélectionner la durée de délivrance de vapeur d'eau et le débit d'air sous forme de couple de valeurs de consigne, parmi un ensemble prédéterminé de couples de valeurs prédéterminées.

3. Procédé de commande selon la revendication 2, **caractérisé en ce qu'**il consiste à utiliser une unité de commande (12) comportant un microprocesseur et une unité de mémoire pour stocker les valeurs prédéterminées.

4. Procédé de commande selon la revendication 2, **caractérisée en ce qu'**il consiste à utiliser une unité de commande (12) comprenant une carte électronique comportant une micro-mémoire dans laquelle sont enregistrés les valeurs prédéterminées.

5. Procédé de commande selon l'une quelconque des revendications 1 à 4, **caractérisé en ce qu'**il consiste à sélectionner des fonctionnalités se rapportant à un mode de production dans lequel on produit de la vapeur et/ou de l'air sous pression ou se rapportant à un mode de maintenance dans lequel le dispositif est nettoyé.

6. Produit programme d'ordinateur comprenant des instructions de code de programme enregistrées sur un support lisible par ordinateur pour mettre en oeuvre les étapes du procédé selon l'une quelconque des revendications 1 à 5, lorsque le programme fonctionne sur un ordinateur.

7. Dispositif pour mettre en oeuvre le procédé de commande conforme à l'une quelconque des revendications 1 à 5, **caractérisé en ce qu'**il comprend :
- une chaudière (1) à vapeur pour produire de la vapeur sous pression, alimentant un mélangeur (17) via une vanne électromagnétique trois voies (19),
- une pompe à air (14) alimentant le mélangeur (17) via une conduite de refoulement (16) avec de l'air sous pression,
- un mousseur à lait (21) pourvu d'un capteur de température additionnel (24) et alimenté par le mélangeur (17) en vapeur et/ou en air sous pression,
- une unité de commande (12) pilotant le fonctionnement de la chaudière à vapeur (1), de la pompe à air (14), de la vanne électromagnétique trois voies (19) et recevant des informations issues des capteurs (6, 7, 24) de température et de pression, et
- des organes d'actionnement reliés à l'unité de commande (12) pour sélectionner les fonctionnalités désirées.

8. Dispositif selon la revendication 7, **caractérisé en ce qu'**il comprend un clapet anti-retour (18) disposé dans la conduite de refoulement (16) de manière à éviter la remontée de vapeur sous pression vers la pompe à air (14).

9. Dispositif selon la revendication 7 ou 8, **caractérisé en ce que** l'unité de commande (12) est reliée à une carte électronique générale (13) pour piloter les paramètres physiques nécessaires à définir les différentes fonctionnalités dudit dispositif.

10. Dispositif selon la revendication 9, **caractérisé en ce que** l'unité de commande (12) comprend une carte électronique comportant une micro-mémoire dans laquelle sont stockés les paramètres physiques.

11. Machine pour la préparation de cafés ou de boissons chaudes, **caractérisée en ce qu'**elle intègre un dispositif conforme à l'une quelconque des revendications 7 à 10.
